# EUROPEAN PATENT APPLICATION

(11) **EP 2 568 565 A2**
(43) Date of publication of application: **13.03.2013**
(21) Application number: 12001316.4
(22) Date of filing: 28.02.2012
(51) Int. Cl.: H02J 7/00

(54) **Mobile terminal and power management unit thereof**

(30) Priority: 06.09.2011 KR 20110090338
(71) Applicant: LG ELECTRONICS INC., Yeongdeungpo-gu Seoul 150-721 (KR)
(72) Inventor: Lee, Kyuho, Gwangmyeong Gyeonggi-Do (KR); Koh, Eunkwang, Jangan-Gu Suwon Gyeonggi-Do (KR); Hyun, Ansun, Dongjak-Gu Seoul (KR)
(74) Representative: TER MEER - STEINMEISTER & PARTNER GbR

(57) **Abstract**

A power management unit (210) of a mobile terminal (200). The power management unit (210) includes a DC-DC converter (212) configured to convert an input voltage into first and second output voltages, the mobile terminal also includes a first boosting circuit (214) configured to boost the first output voltage to a first boosting voltage having a first polarity and to selectively apply the first boosting voltage to a display module (240) of the mobile terminal (200). The mobile terminal (200) also includes a second boosting circuit (216) configured to boost the second output voltage to a second boosting voltage having a second polarity that is opposite to the first polarity of the first boosting voltage, and to selectively apply the second boosting voltage to the display module (240) of the mobile terminal (200).

## Description

### BACKGROUND OF THE INVENTION

**Field of the Invention**

The present invention relates to a power management unit and a mobile terminal including the same.

**Background of the Invention**

Terminals can be classified into a mobile terminal and a stationary terminal. Furthermore, terminals can be classified into a handheld terminal and a vehicle mount terminal. The mobile terminal can also capture still or moving images, play music or video files, play games, receive broadcast and the like, and thus functions as an integrated multimedia player.

In addition, a driving voltage is used to drive a display module mounted in the terminal. The display module receives a voltage supplied by a power source such as a battery and boosts the voltage to generate the driving voltage. However, noise is generated by the driving voltage boosting process. The noise then deteriorates the performances of the display module and an electronic element adjacent to the display module.

### SUMMARY OF THE INVENTION

Therefore, one object of the present invention is to address the above-noted and other problems with the related art.

Another object of the present invention is to provide a mobile terminal and corresponding method for preventing the decrease in the performance of an electronic element adjacent to a display module by noise generated during the driving of the display module and a power management unit (PMU) thereof.

To achieve these and other advantages and in accordance with the purpose of this specification, as embodied and broadly described herein, the present invention provides in one aspect a power management unit of a mobile terminal. The power management unit includes a DC-DC converter configured to convert an input voltage into first and second output voltages; a first boosting circuit configured to boost the first output voltage to a first boosting voltage having a first polarity, and to selectively apply the first boosting voltage to a display module of the mobile terminal; and a second boosting circuit configured to boost the second output voltage to a second boosting voltage having a second polarity that is opposite to the first polarity of the first boosting voltage, and to selectively apply the second boosting voltage to the display module of the mobile terminal.

In another aspect, the present invention provides a mobile terminal including a battery configured to provide an input voltage; a display module including a driver circuit and a display panel; and a power management unit configured to convert the input voltage into first and second output voltages, to boost the first and second output voltages to first and second boosting voltages, respectively, having polarities, and to selectively apply the first and second boosting voltages to the display module of the mobile terminal.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:

FIG. 1 is a block diagram illustrating a mobile terminal according to an embodiment of the present invention;

FIGs. 2A and 2B are perspective views illustrating the outer appearance of the mobile terminal according to an embodiment of the present invention;

FIG. 3 is a block diagram illustrating a mobile terminal according to an embodiment of the present invention;

FIG. 4 is a block diagram illustrating a power management unit illustrated in FIG. 3;

FIG. 5 is a circuit diagram illustrating a first boosting circuit illustrated in FIG. 4;

FIG. 6 is a circuit diagram illustrating a second boosting circuit illustrated in FIG. 4; and

FIG. 7 is a circuit diagram illustrating a power management unit according to another embodiment of the present invention.

### DETAILED DESCRIPTION OF EMBODIMENTS OF THE INVENTION

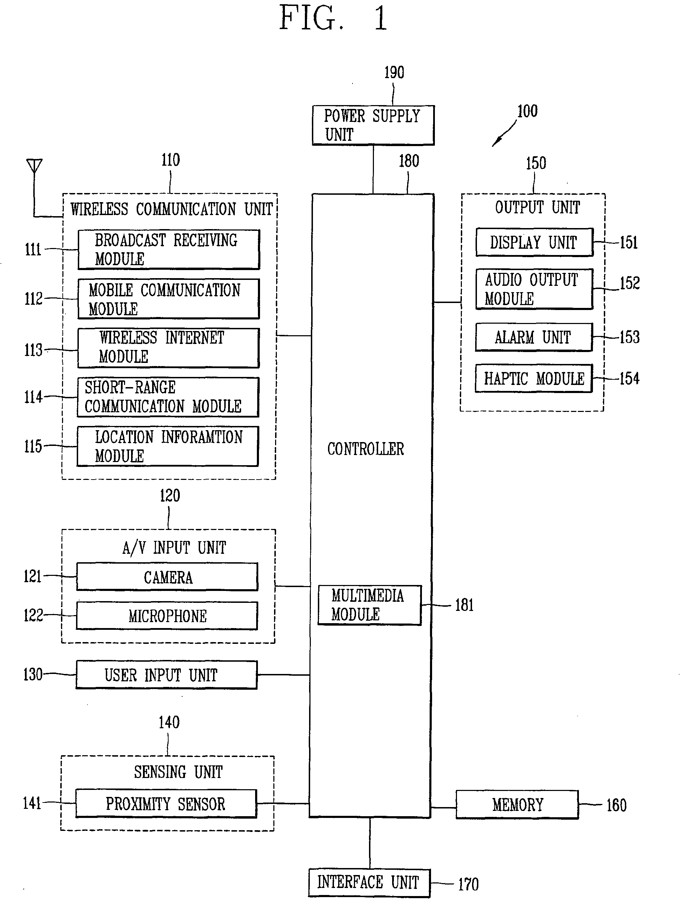

FIG. 1 is a block diagram illustrating a mobile terminal 100 according to one embodiment of the present invention. Referring to FIG. 1, the mobile terminal 100 includes a wireless communication unit 110, an audio/video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile terminal may be implemented with greater or less number of elements than those illustrated elements.

The wireless communication unit 110 generally includes one or more elements allowing radio communication between the mobile terminal 100 and a wireless communication system, or allowing radio communication between radio communication the mobile terminal 100 and a network in which the mobile terminal 100 is located. For example, in FIG. 1, the wireless communication unit 110 includes a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel. Here, the broadcast associated information corresponds to information regarding a broadcast channel, a broadcast program, a broadcast service provider, and the like. The broadcast associated information may also be provided through a mobile communication network, and in this instance, the broadcast associated information may be received by the mobile communication module 112. The broadcast signal and/or broadcast-associated information received through the broadcast receiving module 111 may be stored in the memory 160.

The mobile communication module 112 transmits and/or receives a radio signal to and/or from at least one of a base station, an external terminal and a server over a mobile communication network. Here, the radio signal may include a voice call signal, a video call signal and/or various types of data according to text and/or multimedia message transmission and/or reception.

The wireless Internet module 113, as a module for supporting wireless Internet access, may be built-in or externally installed to the mobile terminal 100. Here, a wireless Internet technique including a WLAN (Wireless LAN), Wi-Fi, Wibro (Wireless Broadband), Wimax™ (World Interoperability for Microwave Access), HSDPA (High Speed Downlink Packet Access), and the like can be used.

The short-range communication module 114 is a module for supporting a short-range communication using a technology including Bluetooth™, Radio Frequency IDentification (RFID), Infrared Data Association (IrDA), Ultra WideBand (UWB), ZigBee™, and the like. In addition, the location information module 115 is a module for checking or acquiring a location of the mobile terminal, and a global positioning system (GPS) module is a representative example.

Referring to FIG. 1, the AV(audio/video) input unit 120 receives an audio or video signal, and the AV (audio/video) input unit 120 includes a camera 121, a microphone 122, and the like. The camera 121 processes an image frame such as a still or moving image obtained by an image sensor in a video phone call or image capturing mode. The processed image frame can then be displayed on a display unit 151. The image frames processed by the camera 121 may also be stored in the memory 160 or transmitted to an external device through the wireless communication unit 110. Two or more cameras 121 can also be provided according to the use environment of the mobile terminal 100.

Further, the microphone 122 receives an external audio signal through a microphone in a phone call mode, a recording mode, a voice recognition mode, and the like, and processes the audio signal into electrical voice data. The processed voice data processed by the microphone 122 can be then converted and output into a format that is transmittable to a mobile communication base station through the mobile communication module 112 in the phone call mode. The microphone 122 may also implement various types of noise canceling algorithms to cancel noise generated in a procedure of receiving the external audio signal.

Further, the user input unit 130 may generate input data to control an operation of the terminal. The user input unit 130 may be configured by including a key pad, a dome switch, a touch pad (pressure/capacitance), a jog wheel, a jog switch, and the like. In addition, the sensing unit 140 detects a current status of the mobile terminal 100 such as an opened or closed status of the mobile terminal 100, a location of the mobile terminal 100, an orientation of the mobile terminal 100, and the like. The sensing unit 140 generates a sensing signal for controlling the operation of the mobile terminal 100.

For example, when the mobile terminal 100 is a slide phone type, the sensing unit 140 can sense an opened or closed status of the slide phone. Furthermore, the sensing unit 140 can sense whether or not power is supplied from the power supply unit 190, or whether or not an external device is coupled to the interface unit 170.

The sensing unit 140 may also include a proximity sensor 141. Furthermore, the sensing unit 140 may include a touch sensor for sensing a touch operation to the display unit 151. The touch sensor may be implemented as a touch film, a touch sheet, a touch pad, and the like. The touch sensor may be configured to convert changes of a pressure applied to or a capacitance occurring from, a specific part of the display unit 151 into electric input signals. Also, the touch sensor may be configured to sense not only a touched position and a touched area, but also a touch pressure.

In addition, when the display unit 151 and the touch sensor have a layered structure therebetween, the display unit 151 may be used as an input device rather than or in addition to, an output device. The display unit 151 may be referred to as a "touch screen". When there is a touch input through the touch screen, the corresponding signals are sent to a touch controller. The touch controller processes the received signals, and then transmits data corresponding to the processed signals to the controller 180. Accordingly, the controller 180 may sense which region of the display unit 151 has been touched.

Further, when the touch screen is implemented with a capacitance type, it may be configured such that the proximity of a detection subject is sensed by changes of an electromagnetic field. In this instance, the touch screen may be categorized as a proximity sensor 141. The proximity sensor 141 refers to a sensor to detect the presence or absence of a detection subject using an electromagnetic field or infrared rays without a mechanical contact. The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on.

Hereinafter, for the sake of convenience, a status that the pointer is positioned to be proximate onto the touch screen without contact will be referred to as "proximity touch", whereas a status that the pointer substantially comes in contact with the touch screen will be referred to as "contact touch". For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The output unit 150 is configured to provide an output associated with visual sense, auditory sense, tactile sense, and the like, and the output unit 150 includes the display unit 151, an audio output module 152, an alarm unit 153, a haptic module 154, and the like. The display unit 151 can display (output) information processed in the mobile terminal 100. For example, when the mobile terminal 100 is in a phone call mode, the display unit 151 can display a User Interface (UI) or a Graphic User Interface (GUI) associated with a call. When the mobile terminal 100 is in a video call mode or image capturing mode, the display unit 151 can display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display. At least one display (or display element) included in the display unit 151 may be configured with a transparent or optical transparent type to allow viewing of the exterior through the display unit (this is referred to as a transparent display). An example of the typical transparent displays include a transparent LCD (TOLED), and the like. Under this configuration, a user can view an object positioned at a rear side of a terminal body through a region occupied by the display unit 151 of the terminal body.

Also, the display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

The audio output module 152 can output audio data received from the wireless communication unit 110 or stored in the memory 160, in a call-receiving mode, a call-placing mode, a recording mode, a voice recognition mode, a broadcast reception mode, and so on. The audio output module 152 can also output audio signals relating to the functions performed in the mobile terminal 100 (e.g., sound alarming a call received or a message received, and so on). The audio output module 152 may include a receiver, a speaker, a buzzer, and so on.

The alarm 153 outputs signals notifying occurrence of events from the mobile terminal 100. The events occurring from the mobile terminal 100 may include a call received, message received, key signal input, touch input, and so on. The alarm 153 can output not only video or audio signals, but also other types of signals such as signals notifying occurrence of events in a vibration manner. Since the video or audio signals can be output through the display unit 151 or the audio output unit 152, the display unit 151 and the audio output module 153 may be categorized into part of the alarm 153.

Further, the haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also an arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 can be configured to transmit tactile effects through a user's direct contact, or a user's muscular sense using a finger or a hand. The haptic module 154 may also be implemented in two or more in number according to the configuration of the mobile terminal 100.

In addition, the memory 160 can store a program for processing and controlling the controller 180. Alternatively, the memory 160 can temporarily store input/output data (e.g., phonebook, messages, still images, videos, and the like). Also, the memory 160 can store data related to various patterns of vibrations and sounds output upon the touch input on the touch screen. Further, the memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate in association with a web storage which performs the storage function of the memory 160 on the Internet.

In addition, the interface unit 170 may generally be implemented to interface the portable terminal with external devices connected to the mobile terminal 100. The interface unit 170 allows a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as "identification device") may be implemented in a type of smart card. Hence, the identification device can be coupled to the mobile terminal 100 via a port.

Also, the interface unit 170 can serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power input from the cradle may operate as signals for recognizing that the mobile terminal 100 has accurately been mounted to the cradle.

In addition, the controller 180 generally controls the overall operations of the mobile terminal 100. For example, the controller 180 performs the control and processing associated with telephony calls, data communications, video calls, and the like. In FIG. 1, the controller 180 includes a multimedia module 181 which provides multimedia playback. The multimedia module 181 may be configured as part of the controller 180 or as a separate component. The controller 180 can perform a pattern recognition processing so as to recognize writing or drawing input carried out on the touch screen as text or image. Further, the power supply unit 190 receives external and internal power to provide power required for various components under the control of the controller 180.

Various embodiments described herein may be implemented in a computer or similar device readable medium using software, hardware, or any combination thereof. For a hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units designed to perform the functions described herein. In some cases, such embodiments may be implemented in the controller 180 itself.

For a software implementation, the embodiments such as procedures or functions may be implemented together with separate software modules that allow performing of at least one function or operation. Software codes can be implemented by a software application written in any suitable programming language. The software codes may be stored in the memory 160 and executed by the controller 180.

Hereinafter, the processing method of a user input to the mobile terminal 100 will be described. The user input unit 130 is manipulated to receive a command for controlling the operation of the mobile terminal 100, and may include a plurality of manipulation units. The manipulation units may be commonly designated as a manipulating portion, and any method may be employed if it is a tactile manner allowing the user to perform manipulation with a tactile feeling.

Various kinds of visual information can be displayed on the display unit 151. The visual information may be displayed in a form of characters, numerals, symbols, graphics, or icons, or may be implemented in three-dimensional solid images. For an input of the visual information, at least one of the characters, numerals, symbols, graphics, or icons may be displayed with a predetermined arrangement so as to be implemented in a form of keypad. Such a keypad may be referred to as a so-called "soft key."

The display unit 151 can also operate on an entire region or operate by dividing into a plurality of regions. In the latter case, the plurality of regions may be configured to operate in an associative way. For example, an output window and an input window may be displayed on the upper portion and lower portion of the display unit, respectively. The output window and the input window may be regions allocated to output or input information, respectively. A soft key on which numerals for inputting phone numbers or the like are displayed is displayed on the input window.

When the soft key is touched, numerals corresponding to the touched soft key are displayed on the output window. When the manipulating unit is manipulated, a call connection for the phone number displayed on the output window is attempted or a text displayed on the output window may be input to an application.

The display unit 151 or the touch pad may be configured to sense a touch scroll. The user may move an object displayed on the display unit 151, for example, a cursor or pointer placed on an icon, by scrolling the display unit 151 or the touch pad. Moreover, when a finger is moved on the display unit 151 or the touch pad, a path of the finger may be visually displayed on the display unit 151. It may be useful to edit an image displayed on the display unit 151.

One function of the mobile terminal 100 may be executed when the display unit 151 and the touch pad are touched together within a predetermined period of time. Touching together when the user clamps a terminal body of the mobile terminal 100 using the thumb and forefinger. One of the functions executed in the mobile terminal 100 may involve activation or de-activation for the display unit 151 or the touch pad.

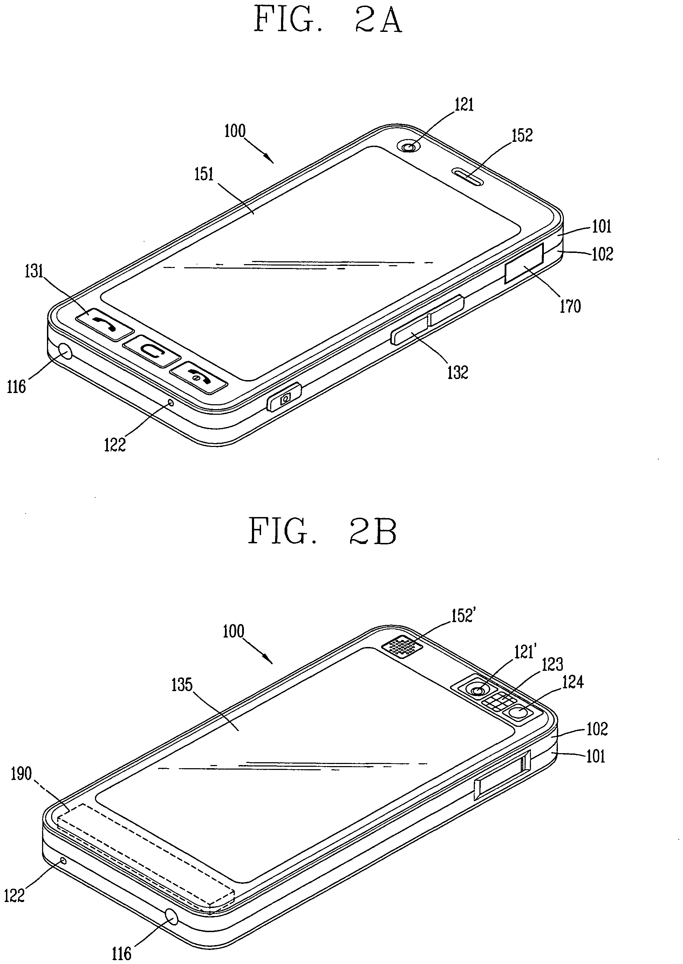

Next, FIGS. 2A and 2B are perspective views illustrating the external appearance of the mobile terminal 100 according to one embodiment of the present invention. In particular, FIG. 2A illustrates a front surface and one lateral surface of the mobile terminal 100, and FIG. 2B illustrates a rear surface and the other lateral surface of the mobile terminal 100.

Referring to FIG. 2A, the mobile terminal 100 has a bar-type terminal body. However, the present invention is not only limited to this type of terminal, but also applicable to various structures of terminals such as slide-type, folder-type, swivel-type, swing-type, and the like, in which two and more bodies are combined with each other in a relatively movable manner.

The terminal body includes a case (casing, housing, cover, etc.) forming an appearance of the terminal. In this embodiment, the case is divided into a front case 101 and a rear case 102. At least one middle case may be additionally disposed between the front case 101 and the rear case 102. The cases may be formed by injection-molding a synthetic resin or may be also formed of a metal material such as stainless steel (STS), titanium (Ti), or the like.

A display unit 151, an audio output module 152, a camera 121, a user input unit 130 (refer to FIG. 1), a microphone 122, an interface unit 170, and the like are also arranged on the terminal body, mainly on the front case 101. Further, as shown in this example, the display unit 151 occupies a portion of the front case 101. The audio output unit 152 and the camera 121 are also disposed on a region adjacent to one of both ends of the display unit 151, and the first manipulation unit 131 and the microphone 122 are disposed on a region adjacent to the other end thereof. The second manipulation unit 132 and the interface 170, and the like, may be disposed on a lateral surface of the front case 101 and the rear case 102.

Further, the user input unit 130 is manipulated to receive a command for controlling the operation of the mobile terminal 100. In this example, the user input unit 130 includes a first manipulation unit 131 and a second manipulation unit 132. In particular, the first 131 or a second 132 manipulating unit can receive various commands. For example, the first manipulation unit 131 can be used to receive a command, such as start, end, scroll, or the like, and the second manipulation unit 132 can be used to receive a command, such as controlling a volume level being output from the audio output unit 152, or switching it into a touch recognition mode of the display unit 151.

Referring to FIG. 2B, a camera 121' may be additionally mounted on a rear surface of the terminal body, namely, the rear case 102. The camera 121' has an image capturing direction, which is substantially opposite to the direction of the camera 121 (refer to FIG. 2A), and may have different pixels from those of the camera 121. For example, it is preferable that the camera 121 has a relatively small number of pixels that is not enough to cause a difficulty when the user captures his or her own face and sends it to the other party during a video call or the like. The camera 121' has a relatively large number of pixels since the user often captures a general object that is not sent immediately.

Meanwhile, the cameras 121, 121' may be provided in the terminal body in a rotatable and pop-upable manner. Furthermore, a flash 123 and a mirror 124 may be additionally disposed adjacent to the camera 121'. The flash 123 illuminates light toward an object when capturing the object with the camera 121', and the mirror 124 allows the user to look at his or her own reflected face when capturing himself or herself (in a self-portrait mode) by using the camera 121'.

Furthermore, an audio output unit 152' may be additionally disposed on a rear surface of the terminal body. The audio output unit 152' together with the audio output unit 152 (refer to FIG. 2A) can implement a stereo function, and can also be used to implement a speaker phone mode during a phone call.

In addition, an antenna 116 for receiving broadcast signals may be additionally disposed on a lateral surface of the terminal body. The antenna 116 constituting a broadcast receiving module 111 (refer to FIG. 1) may be provided so as to be pulled out or extracted from the terminal body. In addition, a power supply unit 190 for supplying power to the portable terminal 100 may be mounted on the terminal body. The power supply unit 190 may be configured so as to be incorporated in the terminal body, or directly detachable from the outside of the terminal body.

Also, a touch pad 135 for detecting a touch may be additionally mounted on the rear case 102. The touch pad 135 may be also configured with an optical transmission type, similar to the display unit 151 (refer to FIG. 2A). Furthermore, a rear side display unit for visual information may be also additionally mounted on the touch pad 135. In this case, information displayed on both surfaces of the front side display unit 151 and the rear side display unit may be controlled by the touch pad 135.

The touch pad 135 may be operated in conjunction with the display unit 151. The touch pad 135 may be disposed in parallel to and at a rear side of the display unit 151. The touch pad 135 may have the same size as or a smaller size than the display unit 151.

Hereinafter, in a mobile terminal according to an embodiment of the present invention, a mechanism of generating a driving voltage for a display module that reduces the influence of noise on an electronic element adjacent to the display module will be described.

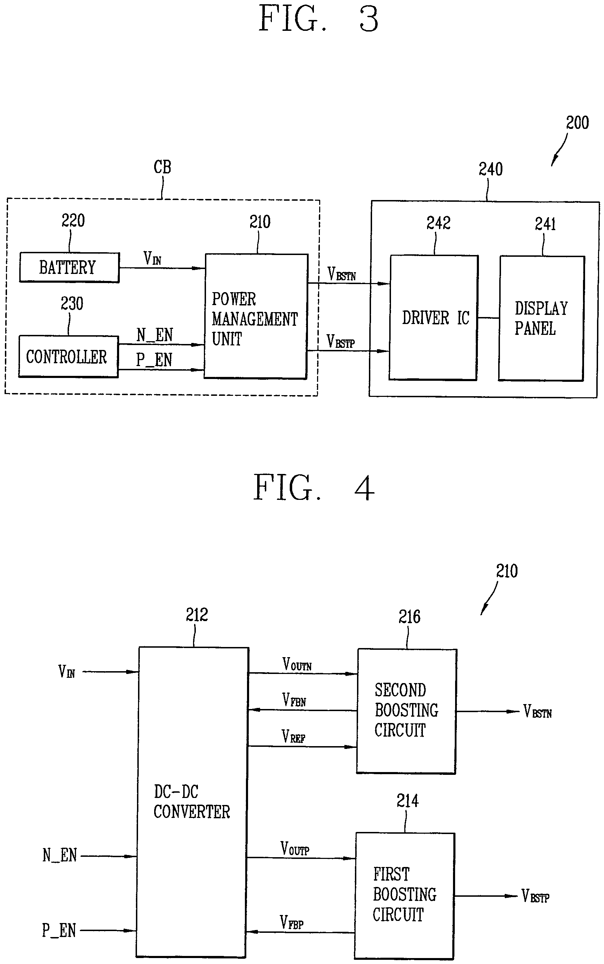

In particular, FIG. 3 is a block diagram illustrating a mobile terminal 200 according to an embodiment of the present invention. Referring to FIG. 3, the mobile terminal 200 includes a power management unit (PMU) 210, a battery 220, a controller 230, and a display module 240. Further, the PMU 210 boosts an input voltage V_{IN} to output first and second boosting voltages V_{BSTP} and V_{BSTN} having opposite polarities. In more detail, the PMU 210 generates the first boosting voltage V_{BSTP} having a larger absolute value than the absolute value of the input voltage V_{IN}. In addition, the PMU 210 generates the first boosting voltage V_{BSTP} having a larger absolute value than the absolute value of the input voltage V_{IN} and having the same polarity as the polarity of the input voltage V_{IN} and the second boosting voltage V_{BSTN} having a larger absolute value than the absolute value of the input voltage V_{IN} and having an opposite polarity to the polarity of the input voltage V_{IN}.

For example, the PMU 210 boosts the input voltage VIN of +2.6V to +3.3V to generate the first boosting voltage V_{BSTP} of+5V to +6V and the second boosting voltage V_{BSTN} of -5V to -5.5V. The input voltage VIN transmitted to the PMU 210 may be provided by an external power source or an internal power source such as the battery 220. The first and second boosting voltages V_{BSTP} and V_{BSTN} output from the PMU 210 are used as the internal driving voltage of the display module 240.

In addition, the PMU 210 can selectively perform boosting operations for generating the first and second boosting voltages V_{BSTP} and V_{BSTN} based on the control signals transmitted from the controller 230. For example, the PMU 210 performs a boosting operation for generating the first boosting voltage V_{BSTP} when a first enable signal P_EN is received and performs a boosting operation for generating the second boosting voltage V_{BSTN} when a second enable signal N_EN is received.

In addition, the battery 220 supplies a power source to an electronic element mounted in the main body of a terminal. The battery 220 may be charged by the power source applied from the outside. In addition, the battery 220 may be charged by wireless power received through a power receiving unit. The battery 220 can also supply the input voltage V_{IN} corresponding to a DC voltage to the PMU 210 while being charged.

Further, the controller 230 can generate control signals for controlling the boosting operations of the PMU 210 in accordance with a control mode. The control signals can include the above-described first and second enable signals P_EN and N_EN. The control mode related to the boosting operation may also be set and changed by the input of a user received from a user input unit.

As shown in FIG. 3, the display module 240 includes a display panel 241 and a driver IC (Integrated Circuit) 242. Further, the display panel 241 is connected to the driver IC 242 through a plurality of driving lines. The display panel 241 includes a plurality of pixels arranged in a matrix of rows and columns, and the plurality of pixels are connected to corresponding driving lines. The display panel 241 may be realized in the form of a liquid crystal display (LCD), a plasma display panel (PDP), a field emission display (FED), and organic light emitting display (OLED).

In addition, the driver IC 242 receives the first and second boosting voltages V_{BSTP} and V_{BSTN} output from the PMU 210. The driver IC 242 can also generate driving signals for driving the display panel 241 using the first and second boosting voltages V_{BSTP} and V_{BSTN}. Also, the driver IC 242 applies the driving signals to the corresponding driving lines in accordance with a predetermined driving method.

In an embodiment of the present invention, the PMU 210 and the display module 240 are mounted in different circuit boards. For example, the display module 240 is mounted in another circuit board arranged to be separated from the circuit board (CB) in which the PMU 210, the battery 220, and the controller 230 are mounted. The mobile terminal 200 also includes an antenna for transmitting and receiving a radio signal, and the antenna is generally closer to the display module 240 than the PMU 210.

As described above, according to an embodiment of the present invention, the driving voltages (hereinafter, referred to as display driving voltages) of the display module 240 are provided by the PMU 210 separated from the display module 240. Therefore, it is possible to prevent noise (hereinafter, referred to as 'boosting noise') generated in a process of boosting the battery voltage in order to generate display driving voltages from affecting the display module 240 and from affecting another apparatus adjacent to the display module 240.

In particular, since the boosting noise is not generated by the display module 240, the present invention advantageously prevents the performance of the antenna adjacent to the display module 240, for example, the receiver sensitivity of the radio signal from deteriorating. In addition, according to an embodiment of the present invention, because an inductor used for the boosting operation can be removed from the display module 240, the volume and size of the display module 240 can be reduced. Therefore, although the internal space of the mobile terminal 200 is narrow, the spatial restriction is reduced in arranging the display module 240.

Hereinafter, the PMU 210 according to the embodiment of the present invention will be described in detail. In particular, FIG. 4 is a block diagram illustrating the PMU 210 illustrated in FIG. 3. Referring to FIG. 4, the PMU 210 includes a DC-DC converter 212 and two boosting circuits 214 and 216. The DC-DC converter 212 converts the input voltage VIN to generate and control the first and second output voltages V_{OUTP} and V_{OUTN}, which means that the DC-DC converter 212 can be realized by a dual output DC-DC converter. The DC-DC converter 212 can also generate the first and second output voltages V_{OUTP} and V_{OUTN} by a switching operation in accordance with a pulse width modulation (PWM) method or a pulse frequency modulation (PFM) method. At this time, the first and second output voltages V_{OUTP} and V_{OUTN} may have different polarities.

In addition, the DC-DC converter 212 can receive the first and second enable signals P_EN and N_EN from a controller. The DC-DC converter 212 performs a switching operation for generating and controlling the first output voltage V_{OUTP} in a logic high level period of the first enable signal P_EN and may not perform the switching operation for generating and controlling the first output voltage V_{OUTP} in a logic low level period of the first enable signal P_EN.

That is, the controller can determine whether to output the first output voltage V_{OUTP} based on the first enable signal P_EN and whether to generate the first boosting voltage V_{BSTP}. Further, the controller can determine whether to output the second output voltage V_{OUTN} and whether to generate the second boosting voltage V_{BSTN} based on the second enable signal N_EN.

In addition, the first boosting circuit 214 boosts the first output voltage V_{OUTP} output from the DC-DC converter 213 to generate the first boosting voltage V_{BSTN}. Also, the second boosting circuit 216 boosts the second output voltage V_{OUTN} output from the DC-DC converter 212 to generate the second boosting voltage V_{BSTN} having an opposite polarity to the polarity of the first boosting voltage V_{BSTP}. For example, when the input voltage V_{IN}, the first output voltage V_{OUTP}, and the second output voltage V_{OUTN} are positive voltages, the first boosting voltage V_{BSTP} may be a positive voltage and the second boosting voltage V_{BSTN} may be a negative voltage.

In addition, the first and second boosting circuits 214 and 216 generate first and second feedback voltages V_{FB}p and V_{FBN} for the first and second boosting voltages V_{BSTP} and V_{BSTN} to transmit the generated first and second feedback voltages V_{FBP} and V_{FBN} to the DC-DC converter 212. At this time, one of the first and second boosting circuits 214 and 216, for example, the second boosting circuit 216 may generate the second feedback voltage V_{FBN} using the reference voltage V_{REF} transmitted from the DC-DC converter 212.

The DC-DC converter 212 can control the first and second output voltages V_{OUTP} and V_{OUTN} based on the first and second feedback voltages V_{FBP} and V_{FBN}. Therefore, the first and second boosting voltages V_{BSTP} and V_{BSTN} can be controlled, which means the amplification ratios of the first and second boosting voltages V_{BSTP} and V_{BSTN} for the input voltage V_{IN} can be controlled based on the first and second feedback voltages V_{FBP} and V_{FBN}.

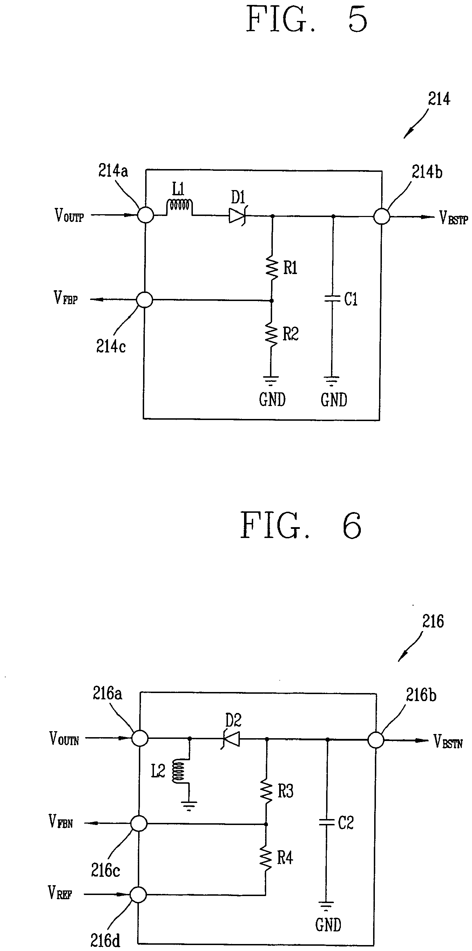

Next, FIG. 5 is a circuit diagram illustrating the first boosting circuit 214 in FIG. 4. Referring to FIGs. 4 and 5, the first boosting circuit 214 includes a first input terminal 214a, a first output terminal 214b, a first feedback terminal 214c, a first inductor L1, a first diode D1, a first capacitor C1, and two resistors R1 and R2.

In addition, the first output voltage V_{OUTP} of the DC-DC converter 212 is input through the first input terminal 214a, the first boosting voltage V_{BSTP} is output through the first output terminal 214b, and the first feedback voltage V_{FBP} is output through the first feedback terminal 214c.

Further, in this embodiment, the first inductor L1 and the first diode D1 are serially connected between the first input terminal 214a and the first output terminal 214b. In more detail, one end of the first inductor L1 is connected to the first input terminal 214a, the cathode of the first diode D1 is connected to the first output terminal 214b, and the other end of the first inductor L1 is connected to the anode of the first diode D1.

Thus, the first inductor L1 charges energy corresponding to the first output voltage V_{OUTP}, and the charged energy is used for boosting the first output voltage V_{OUTP.} The first boosting voltage V_{BSTP} having the same polarity as the polarity of the first output voltage V_{OUTP} is also generated by the described connection structure of the first inductor L1 and the first diode D1.

In addition, the first capacitor C1 is connected between the first output terminal 214b and a ground GND so that the first boosting voltage V_{BSTP} can be stably output. The first and second resistors R1 and R2 and the first feedback terminal 214c also form a first feedback circuit for generating the first feedback voltage VFBP to transmit the generated first feedback voltage V_{FBP} to the DC-DC converter 212.

As shown, the first and second resistors R1 and R2 are serially connected between the first output terminal 214b and the ground GND so as to distribute the first boosting voltage V_{BSTP} in accordance with a voltage distributing rule. In this instance, the first feedback voltage V_{FBP} corresponds to the distributed voltage of the first boosting voltage V_{BSTP}, for example, the voltage obtained by distributing the first boosting voltage V_{BSTP} and loaded at the connection nodes of the first and second resistors R1 and R2.

Next, FIG. 6 is a circuit diagram illustrating the second boosting circuit 216 in FIG. 4. Referring to FIGs. 4 and 6, the second boosting circuit 216 includes a second input terminal 216a, a second output terminal 216b, a second feedback terminal 216c, a reference voltage input terminal 216d, a second inductor L2, a second diode D2, a second capacitor C2, and two resistors R3 and R4.

The second output voltage V_{OUTN} of the DC-DC converter 212 is input through the second input terminal 216a, the second boosting voltage V_{BSTN} is output through the second output terminal 216b, the first feedback voltage V_{FBN} is output through the second feedback terminal 216c, and the reference voltage V_{REF} is input through the reference voltage input terminal 216d.

Further, the second inductor L2 is connected between the second input terminal 216a and the ground GND. Thus, the second inductor L2 charges energy corresponding to the second output voltage V_{OUTN}. The charged energy can then be used for boosting the second output voltage V_{OUTN}.

In addition, the second diode D2 is connected between the second input terminal 216a and the second output terminal 216b. In more detail, the anode of the second diode D2 is connected to the second output terminal 216b and the cathode of the second diode D2 is connected to the second input terminal 216a. That is, the connection direction of the second diode D2 is reverse to the connection direction of the first diode D1 illustrated in FIG. 5.

Further, the second boosting voltage V_{BSTN} having the opposite polarity to the polarity of the second output voltage V_{OUTN} can be generated by the illustrated connection structure of the second inductor L2 and the second diode D2. Also, the second capacitor C2 is connected between the second output terminal 216b and the ground GND so that the second boosting voltage V_{BSTN} can be stably output like the first capacitor C1 illustrated in FIG. 5.

The third and fourth resistors R3 and R4 and the second feedback terminal 216c also form a second feedback circuit for generating the second feedback voltage V_{FBN} to transmit the generated second feedback voltage V_{FBN} to the DC-DC converter 212. As shown, the third and fourth resistors R3 and R4 are serially connected between the second output terminal 216b and the reference voltage input terminal 216d so as to distribute the second boosting voltage V_{BSTN} in accordance with the voltage distributing rule. In this instance, the second feedback voltage V_{FBN} corresponds to the distributed voltage of a voltage difference between the second boosting voltage V_{BSTN} and the reference voltage V_{REF}, for example, the voltage obtained by distributing the voltage difference between the second boosting voltage V_{BSTN} and the reference voltage V_{REF} and loaded at the connection nodes of the third and fourth resistors R3 and R4.

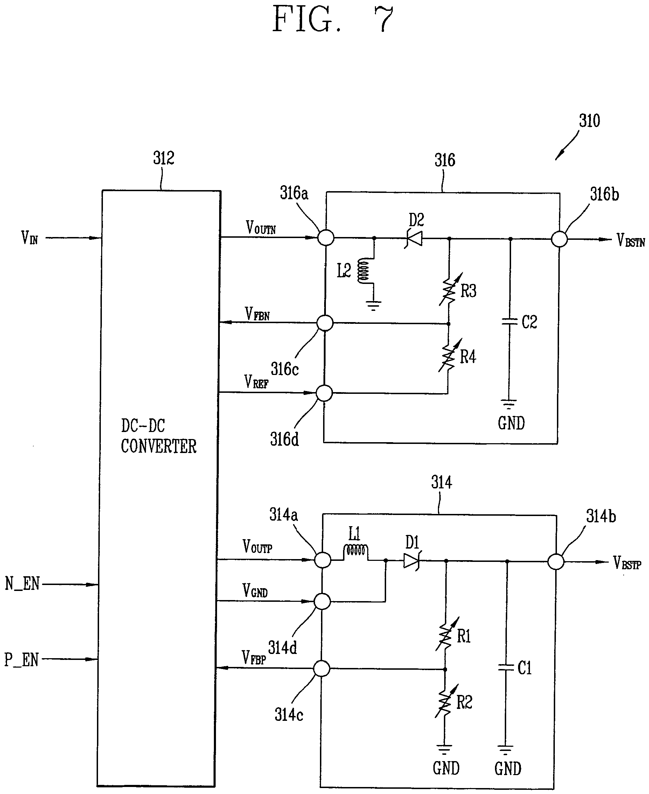

Next, FIG. 7 is a circuit diagram illustrating a PMU 310 according to a another embodiment of the present invention. Hereinafter, a redundant description of the PMU 310 is omitted. Referring to FIG. 7, the DC-DC converter 312 transmits a ground voltage V_{GND} to the first boosting circuit 314. Therefore, the DC-DC converter 312 can selectively connect a terminal for outputting the ground voltage V_{GND} to the ground by a switching operation in accordance with the PWM method or the PFM method.

At this time, the DC-DC converter 312 can complementarily perform a switching operation for the first output voltage V_{OUTP} and a switching operation for the ground voltage V_{GND}. That is, the ground voltage V_{GND} may not be output while the first output voltage V_{OUTP} is output and the first output voltage V_{OUTP} may not be output while the ground voltage V_{GND} is output.

In this embodiment, the first boosting circuit 314 also includes a ground voltage input terminal 314d to which the ground voltage V_{GND} is input. In more detail, the ground voltage input terminal 314d is connected to the connection nodes of the first inductor L1 and the first diode D1, that is, the other end of the first inductor L1 and the anode of the first diode D1. Therefore, a path through which energy charged in the first inductor L1 is discharged is formed between the first input terminal 314a and the ground voltage input terminal 314d.

In addition, the resistors R1 to R4 that constitute a feedback circuit may be realized by variable resistors that change resistance values in response to the control signal of a controller. Therefore, the resistance values of the first and second resistors R1 and R2 are changed to change the first feedback voltage V_{FBP}, and the resistance values of the third and fourth resistors R3 and R4 are changed to change the second feedback voltage V_{FBN}. As described above, because the amplification ratios of the first and second boosting voltages V_{BSTP} and V_{BSTN} for the input voltage V_{IN} can be controlled based on the first and second feedback voltages V_{FBP} and V_{FBN}, the first and second boosting voltages V_{BSTP} and V_{BSTN} can be set based on the first to fourth resistors R1 to R4.

In the mobile terminal disclosed in the embodiments of the present specification, the structures and methods of the above-described embodiments are not limitedly applied but all or parts of the embodiments are selectively combined with each other so that various modifications may be performed. Also, the structures and methods of the above-described embodiments are not limitedly applied but all or parts of the embodiments may be selectively combined with each other so that various modifications may be performed.

## Claims

1. A mobile terminal (200), comprising:
a battery (220) configured to provide an input voltage;
a display module (240) including a driver circuit (242) and a display panel (241); and
a power management unit (210) configured to convert the input voltage into first and second output voltages, to boost the first and second output voltages to first and second boosting voltages having opposite polarities, and to selectively apply the first and second boosting voltages to the display module.

2. The mobile terminal (200) as claimed in claim 1, the power management unit comprising:
a DC-DC converter (212) configured to convert an input voltage into first and second output voltages;
a first boosting circuit (214) configured to boost the first output voltage to a first boosting voltage having a first polarity, and to selectively apply the first boosting voltage to the display module (240); and
a second boosting circuit (216) configured to boost the second output voltage to a second boosting voltage having a second polarity that is opposite to the first polarity of the first boosting voltage, and to selectively apply the second boosting voltage to the display module (240).

3. The mobile terminal (200) as claimed in claim 2, wherein the first and second boosting circuits (214, 216) are further configured to generate first and second feedback voltages for the first and second boosting voltages and to output the generated first and second feedback voltages to the DC-DC converter (212), and
wherein the DC-DC converter (212) is further configured to output the first and second output voltages based on the first and second feedback voltages.

4. The mobile terminal (200) as claimed in claim 3, wherein the first boosting circuit (214) comprises:
a first input terminal (214a) to which the first output voltage is input;
a first output terminal (214b) from which the first boosting voltage is output;
a first inductor (L1) having one end connected to the first input terminal (214a) to charge energy corresponding to the first output voltage;
a first diode (D1) connected between the other end of the first inductor (L1) and the first output terminal (214b); and
a first capacitor (C1) connected between the first output terminal (214b) and a ground to stabilize the first boosting voltage.

5. The mobile terminal (200) as claimed in claim 4, wherein the first boosting circuit (214) further comprises first and second resistors (R1, R2) serially connected between the first output terminal (214b) and the ground to distribute the first boosting voltage, and
wherein the first feedback voltage corresponds to a distributed voltage of the first boosting voltage.

6. The mobile terminal (200) as claimed in claim 4, wherein an anode and a cathode of the first diode (D1) are respectively connected to the other end of the first inductor (L1) and the first output terminal (214b).

7. The mobile terminal (200) as claimed in claim 5, wherein the second boosting circuit (216) comprises:
a second input terminal (216a)_to which the second output voltage is input;
a second output terminal (216b) from which the second boosting voltage is output;
a second inductor (L2) connected between the second input terminal (216a) and the ground to charge energy corresponding to the second output voltage;
a second diode (D2) connected between the second input terminal (216a) and the second output terminal (216b); and
a second capacitor (C2) connected between the second output terminal (216b) and the ground to stabilize the second boosting voltage.

8. The mobile terminal (200) as claimed in claim 7, wherein the second boosting circuit (216) further comprises:
a reference voltage input terminal (216d) to which a reference voltage provided from the DC-DC converter (212) is input; and
third and fourth resistors (R3, R4) serially connected between the second output terminal (216b) and the reference voltage input terminal (216d) to distribute a voltage difference between the second boosting voltage and the reference voltage, and
wherein the second feedback voltage corresponds to a distributed voltage of the voltage difference.

9. The mobile terminal (200) as claimed in claim 7, wherein an anode and a cathode of the second diode (D2) are respectively connected to the second output terminal (216b) and the second input terminal (216a).

10. The mobile terminal (200) as claimed in claim 1, wherein the first and second output voltages have the same polarity.

11. The mobile terminal (200) as claimed in claim 1, wherein the first and second boosting voltages are applied to the display module (240) as a driving voltage of the display module (240).

12. The mobile terminal (200) as claimed in claim 1, wherein the DC-DC converter (212) is further configured to generate the first and second output voltages by a switching operation in accordance with a pulse width modulation (PWM) method or a pulse frequency modulation (PFM) method.

13. The mobile terminal (200) as claimed in claim 1, wherein the power management unit (210) is disposed within the mobile terminal (200) a predetermined distance away from the display module (240) to reduce an effect of boosting noise generated by the power management unit (210).

14. The mobile terminal (200) as claimed in claim 1, wherein the power management unit (210) and the display module (240) are mounted on different circuit boards.

15. The mobile terminal (200) as claimed in claim 1, further comprising:
an antenna configured to transmit and receive a radio signal to and from at least one other terminal,
wherein the antenna is disposed closer to the display module (240) than the power management unit (210).
